# FASCICULE DE BREVET EUROPEEN

(11) **EP 2 754 245 B1**
(45) Date de publication et mention de la délivrance du brevet: **07.03.2018**
(21) Numéro de dépôt: 12753734.8
(22) Date de dépôt: 04.09.2012
(51) Int. Cl.: H04B 1/00, H04B 1/04

(54) **NOEUD DE COMMUNICATION ADAPTÉ POUR RECEVOIR ET/OU TRANSMETTRE DES RADIOCOMMUNICATIONS SELON SIMULTANÉMENT AU MOINS UN PREMIER ET UN DEUXIÈME PROTOCOLES DE COMMUNICATION**
KOMMUNIKATIONSKNOTENZUM EMPFANGEN UND/ODER SENDEN VON FUNKKOMMUNIKATION GEMÄSS MINDESTENS EINEM ERSTEN UND EINEM ZWEITEN KOMMUNIKATIONSPROTOKOLL GLEICHZEITIG
COMMUNICATION NODE SUITABLE FOR RECEIVING AND/OR TRANSMITTING RADIO COMMUNICATIONS ACCORDING TO AT LEAST ONE FIRST AND ONE SECOND COMMUNICATIONS PROTOCOL SIMULTANEOUSLY

(30) Priorité: 05.09.2011 FR 1102689
(43) Date de publication de la demande: 16.07.2014
(73) Titulaire: THALES, 92200 Neuilly-sur-Seine (FR)
(72) Inventeur: SOULIE, Antoine, F-92622 GennevilliersCedex (FR)
(74) Mandataire: Lavoix
(86) Numéro de dépôt international: PCT/EP2012/067208
(87) Numéro de publication internationale: WO 2013/034542

(56) Documents cités:
- EP-A1- 0 581 573
- WO-A1-2005/104389
- US-A1- 2008 205 560
- US-A1- 2011 195 705

## Description

La présente invention concerne un noeud de communication adapté pour recevoir et/ou émettre des radiocommunications selon simultanément au moins un premier protocole de communication et un deuxième protocole de communication distinct du premier protocole, comportant :
un premier étage de traitement numérique adapté pour effectuer des opérations spécifiques au premier protocole sur un signal numérique et un deuxième étage de traitement numérique adapté pour effectuer des opérations spécifiques au deuxième protocole sur un signal numérique, lesdits étages de traitement numériques étant adaptés pour opérer en parallèle,
un premier étage de réception adapté pour fonctionner selon le premier protocole de communication,
un deuxième étage de réception adapté pour fonctionner selon le deuxième protocole de communication,
le premier, respectivement deuxième, étage de réception comprenant un récepteur radiofréquence adapté pour recevoir un signal radiofréquence, un démodulateur adapté pour démoduler le signal radiofréquence reçu et un convertisseur analogique/numérique pour convertir le signal démodulé analogique en un signal numérique fourni au premier, respectivement deuxième, étage de traitement numérique,
un étage d'émission adapté pour fonctionner selon le premier protocole de communication et selon le deuxième protocole de communication, comprenant un convertisseur numérique/analogique pour convertir en un signal analogique un signal numérique fourni par le premier étage de traitement numérique ou le deuxième étage de traitement numérique, un modulateur adapté pour moduler ledit signal analogique, un amplificateur et un émetteur radiofréquence adapté pour émettre un signal radiofréquence correspondant au signal analogique modulé,

De tels noeuds radio sont par exemple mobiles et utilisés dans les applications de télécommunications tactiques militaires.

Un tel noeud radio permet d'offrir une capacité de communication en parallèle sur plusieurs réseaux de communications configurés de manière différente, par exemple opérant dans des gammes radio distinctes.

Dans des noeuds radio de l'art antérieur, lorsque le noeud doit prendre en charge le relais de communications d'un réseau additionnel, on complète le noeud par une chaîne complète de réception, traitement, émission, conforme au protocole de communication mis en oeuvre dans ce réseau additionnel. La multiplication des réseaux entraîne ainsi la multiplication du volume occupé par le noeud, ainsi que l'augmentation de la consommation électrique du noeud.

Il existe aussi des techniques selon lequel des modules communs sont utilisés pour la communication sur différents réseaux, en reconfigurant de façon logicielle les modules à chaque fois que le réseau pour lequel ils sont utilisés change. Toutefois la reconfiguration logicielle est un processus lent, qui nécessite entre 5 et 30 secondes pour charger/décharger les logiciels des différents composants des cartes numériques du modem. La simultanéité des communications sur les réseaux distincts n'est donc pas assurée. Donc le volume du noeud reste important si le nombre de réseaux avec lesquels il est nécessaire de communiquer simultanément est important. Le document US6185202 décrit un noeud de communication qui en fonction de la survenue d'un événement ajuste les paramètres de transmission de canaux de communication afin d'allouer de façon flexible les capacités de transmission.

A cet effet, suivant un premier aspect, l'invention a pour objet un noeud de télécommunication du type précité, caractérisé en ce qu'il comprend :
en outre un module de pilotage adapté pour détecter la survenue d'un événement, pour sélectionner en fonction d'une règle et dudit événement détecté, le premier protocole de communication ou le deuxième protocole de communication et pour commander l'étage d'émission pour fonctionner sélectivement selon le protocole sélectionné et pour ne plus fonctionner selon le protocole non sélectionné.

L'invention permet ainsi de fournir des capacités de communication en parallèle sur plusieurs réseaux à l'aide d'un même noeud, tout en respectant des contraintes d'alimentation électrique et/ou en minimisant le volume des noeuds.

Dans des modes de réalisation, le noeud de communication suivant l'invention comporte en outre une ou plusieurs des caractéristiques suivantes :
- le module de pilotage est en outre adapté, suite à la sélection dudit protocole, pour commander à l'étage numérique, parmi le premier étage de traitement numérique et le deuxième étage de traitement numérique, adapté pour fonctionner selon le protocole de communication non sélectionné, de stopper la fourniture de signal numérique à l'étage d'émission ;
- le noeud est adapté pour commander l'émission par l'étage d'émission selon le protocole de communication non sélectionné, avant que ledit étage d'émission ne fonctionne sélectivement selon le protocole sélectionné, d'une notification d'un arrêt d'émission selon ledit protocole de communication non sélectionné ;
- l'événement détecté par le module de pilotage comprend l'indication d'une donnée à émettre par le noeud, une requête de synchronisation par un des premier et deuxième étages de traitement numérique et/ou l'absence de signal numérique fourni par un des premier et deuxième étages de traitement numérique ;
- la règle est relative à au moins un noeud destinataire et/ou un noeud émetteur, un ordre de priorité affecté à des données de communication reçues par le noeud, et/ou une contrainte de synchronisation propre au premier et/ou au deuxième étage de traitement numérique ;
- le premier, respectivement deuxième, étage de réception est adapté pour fonctionner alternativement selon le premier protocole de communication et le deuxième protocole de communication, et dans lequel lorsque le module de pilotage commande l'étage d'émission pour fonctionner sélectivement selon le protocole sélectionné et pour ne plus fonctionner selon le protocole non sélectionné :
   - il commande en outre le premier étage de réception pour fonctionner sélectivement selon le protocole sélectionné et pour ne plus fonctionner selon le protocole non sélectionné,
   - il commande en outre le deuxième étage de réception pour fonctionner sélectivement selon le protocole non sélectionné et pour ne plus fonctionner selon le protocole sélectionné,
   - il commute les premier et deuxième étages de réception pour la fourniture des données destinées aux premier et deuxième étages numériques ;
- les premier et deuxième étages de traitement numériques comportent chacun au moins un processeur qui lui est spécifique.

Suivant un deuxième aspect, l'invention a pour objet un procédé de traitement dans un noeud de communication adapté pour recevoir et/ou émettre des radiocommunications selon simultanément au moins un premier protocole de communication et un deuxième protocole de communication distinct du premier protocole, le noeud comprenant
un premier étage de traitement numérique adapté pour effectuer des opérations spécifiques au premier protocole sur un signal numérique et un deuxième étage de traitement numérique adapté pour effectuer des opérations spécifiques au deuxième protocole sur un signal numérique, lesdits étages de traitement numériques étant adaptés pour opérer en parallèle,
un premier, respectivement deuxième, étage de réception adapté pour fonctionner selon le premier, respectivement deuxième, protocole de communication, et comprenant chacun un récepteur radiofréquence adapté pour recevoir un signal radiofréquence, un démodulateur adapté pour démoduler le signal radiofréquence reçu et un convertisseur analogique/numérique pour convertir le signal démodulé analogique en un signal numérique fourni au premier, respectivement deuxième, étage de traitement numérique,
un étage d'émission adapté pour fonctionner selon le premier protocole de communication et selon le deuxième protocole de communication, comprenant un convertisseur numérique/analogique pour convertir en un signal analogique un signal numérique fourni par le premier étage de traitement numérique ou le deuxième étage de traitement numérique, un modulateur adapté pour moduler ledit signal analogique, un amplificateur et un émetteur radiofréquence adapté pour émettre un signal radiofréquence correspondant au signal analogique modulé,
le procédé étant caractérisé en ce qu'il comprend les étapes suivantes mises en oeuvre par le noeud :
- la survenue d'un événement est détectée, et il est sélectionné en fonction d'une règle et dudit événement détecté, le premier protocole de communication ou le deuxième protocole de communication ; et
- on commande l'étage d'émission pour fonctionner sélectivement selon le protocole sélectionné et pour ne plus fonctionner selon le protocole non sélectionné.

L'invention sera mieux comprise à la lecture de la description qui suit et à l'examen des figures qui l'accompagnent. Ces figures sont données à titre illustratif, mais nullement limitatif de l'invention. Ces figures sont les suivantes :
la figure 1 est une vue d'un noeud dans un mode de réalisation de l'invention ;
la figure 2 illustre une première configuration de fonctionnement du noeud 1 ;
la figure 3 illustre une deuxième configuration de fonctionnement du noeud 1 ;
la figure 4 est une vue d'un système de communication comportant trois noeuds dans un mode de réalisation de l'invention ;
la figure 5 est un organigramme d'un procédé dans un mode de réalisation de l'invention.

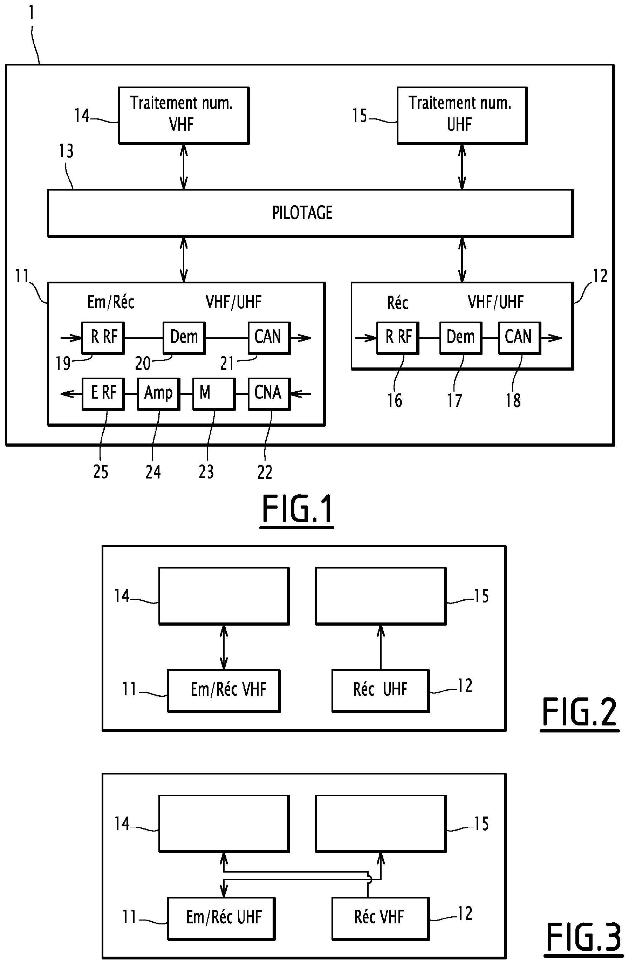

La figure 1 montre un exemple de réalisation d'un noeud radio 1 dans un mode de réalisation de l'invention.

Le noeud radio 1 est un poste radio adapté pour constituer un noeud radio d'un réseau de télécommunications UHF et d'un réseau de télécommunications VHF.

Le noeud radio 1 comporte un module d'émission/réception VHF/UHF 11, un module de réception VHF/UHF 12, un module de pilotage 13, un module de traitement numérique VHF 14 et un module de traitement numérique UHF 15.

Le module de pilotage est adapté pour piloter le fonctionnement du module d'émission/réception VHF/UHF 11, du module de réception VHF/UHF 12, du module de traitement numérique VHF 14 et du module de traitement numérique UHF 15.

Le module d'émission/réception VHF/UHF 11 et le module de réception VHF/UHF 12 sont adaptés pour opérer chacun soit dans la gamme VHF (en anglais « Very High Frequency », gamme de radiofréquences 30 MHz-300 MHz), soit dans la gamme UHF (en anglais « Ultra High Frequency », gamme de radiofréquences 300 MHz-3 000 MHz), en fonction d'une commande respective fournie par le module de pilotage 13 leur indiquant le mode d'opération VHF ou UHF.

Le module de réception 12 comprend un récepteur radiofréquence 16, adapté pour recevoir un signal radiofréquence indiquant des données de télécommunication adressées au noeud 1 sur un canal radio de réception déterminé UHF ou VHF déterminé en fonction d'une commande du module de pilotage 13, un démodulateur 17 adapté pour démoduler un tel signal radiofréquence et éventuellement appliquer un filtrage, un convertisseur analogique/numérique 18 pour convertir le signal démodulé en données numériques représentatives des données de télécommunication adressées au noeud 1.

Le noeud 1 est en outre adapté pour que ces données numériques soient aiguillées, sous le pilotage du module de pilotage 13 vers le module de traitement numérique adapté VHF 14, respectivement UHF 15, selon que le module de réception 12 a opéré en mode VHF, respectivement UHF, pour délivrer ces données numériques.

Le module d'émission/réception VHF/UHF 11 comporte lui aussi un récepteur radiofréquence 19, adapté pour recevoir un signal radiofréquence indiquant des données de télécommunication adressées au noeud 1 sur un canal radio de réception déterminé UHF ou VHF déterminé en fonction d'une commande du module de pilotage 13, un démodulateur 20 adapté pour démoduler un tel signal radiofréquence et éventuellement appliquer un filtrage, un convertisseur analogique/numérique 21 pour convertir le signal démodulé en données numériques représentatives des données de télécommunication.

Le noeud 1 est en outre adapté pour que ces données numériques soient alors aiguillées sous le pilotage du module de pilotage 13 vers le module de traitement numérique adapté VHF 14, respectivement UHF 15, selon que le module de réception 12 a opéré en mode VHF, respectivement UHF, pour délivrer ces données numériques.

Le module d'émission/réception VHF/UHF 11 comporte en outre un convertisseur numérique/analogique 22 adapté pour recevoir des données numériques délivrées par le module de traitement numérique VHF 14, respectivement UHF 15, conformément au pilotage du module de pilotage 13, selon que le module d'émission/réception 11 opère en en VHF, respectivement en UHF, un modulateur 23, un amplificateur de puissance 24 et un émetteur radiofréquence 25. Le convertisseur numérique/analogique 22 convertit les données numériques reçues en données analogiques et les fournit au modulateur 23 qui module ces données analogiques à l'aide d'un signal à une fréquence de modulation VHF ou UHF selon la gamme de fréquence commandée par le module de pilotage 13, avant de les délivrer l'amplificateur de puissance 24, qui après avoir réalisé une amplification de puissance (de l'ordre de 20-30 dB), transmet le signal amplifié à l'émetteur radiofréquence 25. Ce dernier émet alors le signal radiofréquence amplifié.

Le module de traitement numérique VHF 14, respectivement UHF 15, comporte par exemple un carte numérique dotée d'un microprocesseur et adaptée pour effectuer des traitements propres à la communication en VHF, respectivement en UHF, pour analyser les données numériques qui lui sont transmises en entrée par le module de réception 12 ou le module d'émission/réception 11, selon le pilotage par le module de pilotage 13, et/ou appliquer des codes correcteurs d'erreurs, et/ou régénérer des données, identifier le noeud émetteur de certaines de ces données, demander des retransmissions de données à des noeuds émetteurs, générer des requêtes de canaux de signalisation destiné à au moins un autre noeud etc.

Ainsi le noeud radio 1 ne dispose pas d'une capacité d'émission simultanée en UHF/VHF puisqu'il n'utilise qu'une ressource d'émission, fonctionnant alternativement, et non simultanément, en UHF et VHF.

Selon l'invention, le module de pilotage 13 est adapté pour déterminer en temps réel quel module de traitement numérique parmi les modules de traitement numérique VHF 14 et UHF 15 est sélectionné pour fournir des données numériques pour émission radiofréquence au module d'émission/réception 11.

Dans le cas (cas « émission VHF ») où le module de pilotage 13 détermine que c'est le module de traitement numérique VHF 14 qui est sélectionné pour fournir des données numériques pour émission radiofréquence au module d'émission/réception 11, alors le module de pilotage 13 simultanément :
- commande le module d'émission/réception 11 pour fonctionner dans la gamme VHF,
- commande le module de réception 12 pour fonctionner de façon complémentaire dans la gamme UHF,
- commande les raccordements entre les modules de traitements numériques 14, 15 et les modules de réception et/ou émission 11, 12, par exemple en pilotant des commutateurs, de manière à ce que :
   ∘ le module VHF 14 est averti qu'il peut fournir des données numériques à émettre (fin du mode « silence radio ») au module d'émission/réception 11 pour émission radiofréquence via les traitements successifs opérés par le convertisseur numérique/analogique 22, le modulateur 23, l'amplificateur 24 et l'émetteur radiofréquence 25 ;
   ∘ les données VHF reçues par le récepteur 19 de l'émetteur/récepteur 11, après avoir été démodulées par le démodulateur 20 et numérisées par le convertisseur analogique/numérique 21 sont fournies au module de traitement numérique VHF 14 ;
   ∘ les données UHF reçues par le récepteur 16 après avoir été démodulées par le démodulateur 17 et numérisées par le convertisseur analogique/numérique 18 sont fournies au module de traitement numérique UHF 15 ;
- commande le module de traitement numérique UHF 15 pour stopper la fourniture par ce module, de données à émettre (mode « silence radio », encore appelé « veille émission »).

La configuration correspondant à ce cas « émission VHF » est illustrée en figure 2.

Dans le cas (cas « émission UHF ») où le module de pilotage 13 détermine que c'est le module de traitement numérique UHF 15 qui est sélectionné pour fournir des données numériques pour émission radiofréquence au module d'émission/réception 11, alors le module de pilotage 13 simultanément :
- commande le module d'émission/réception 11 pour fonctionner dans la gamme UHF,
- commande le module de réception 12 pour fonctionner de façon complémentaire dans la gamme VHF,
- commande les raccordements entre les modules de traitements numériques 14, 15 et les modules de réception et/ou émission 11, 12, par exemple en pilotant des commutateurs, de manière à ce que :
   ∘ le module UHF 15 est averti qu'il peut fournir des données numériques à émettre (fin du mode « silence radio ») et les données numériques traitées par le module UHF 15 sont fournies au module d'émission/réception 11 pour émission radiofréquence via les traitements successifs opérés par le convertisseur numérique/analogique 22, le modulateur 23, l'amplificateur 24 et l'émetteur radiofréquence 25 ;
   ∘ les données UHF reçues par le récepteur 19 de l'émetteur/récepteur 11, après avoir été démodulées par le démodulateur 20 et numérisées par le convertisseur analogique/numérique 21 sont fournies au module de traitement numérique UHF 15 ;
   ∘ les données VHF reçues par le récepteur 16 après avoir été démodulées par le démodulateur 17 et numérisées par le convertisseur analogique/numérique 18 sont fournies au module de traitement numérique VHF 14 ;
- commande le module de traitement numérique VHF 14 pour stopper la fourniture par ce module, de données à émettre (mode « silence radio » ou « veille émission »).

La configuration correspondant à ce cas « émission UHF » est illustrée en figure 3.

L'opération de détermination du cas parmi le cas « émission VHF » et le cas « émission UHF » est réalisée à chaque détection d'un événement ou d'événements déterminé(s) par le module de pilotage 13.

Un tel événement peut être de nature diverse : par exemple l'écoulement d'une temporisation donnée et/ou l'identification de données à émettre par le noeud 1 par l'un et ou l'autre des modules de traitements numériques VHF 14, UHF 15 et/ou une notification du module de traitement numérique VHF 14, respectivement UHF 15 selon laquelle une opération de synchronisation doit être réalisée avec au moins un autre noeud sur le réseau VHF, respectivement UHF et/ou une notification indiquant une absence de données à émettre fournie par l'un et ou l'autre des modules de traitements numériques VHF 14, UHF 15 etc.

Dans un mode de réalisation, le passage du noeud 1 en mode « silence radio » en UHF, respectivement en VHF, est signalé aux noeuds voisins par l'émission UHF, respectivement VHF, d'une notification correspondante par le module d'émission/réception 11 avant le passage dans le mode « silence radio » du module de traitement UHF 15 et avant le passage en mode VHF du module d'émission/réception (cas « émission VHF »), respectivement avant le passage dans le mode « silence radio » du module de traitement VHF 14 et avant le passage en mode UHF du module d'émission/réception 11 (cas « émission UHF »).

Les noeuds du réseau UHF, respectivement VHF, concernés par ce silence radio sont ainsi avertis que leurs émissions à destination du noeud 1 ne seront pas acquittées immédiatement par ce dernier, et adaptent éventuellement leur mode de transmission afin de le fiabiliser.

Dans un autre mode de réalisation, le module de pilotage 13 ne commande pas au module de traitement numérique auquel le module de réception 12 fournit ses données numériques, de passer en mode « silence radio », par exemple lorsque cette configuration est prévue pour être de courte durée.

La détermination du cas parmi le cas « émission VHF » et le cas « émission UHF » est réalisée par le module de pilotage 13 en fonction d'une règle ou de plusieurs règles combinées. Une règle est par exemple fonction d'un ou plusieurs destinataire(s)/émetteur(s) de données à émettre et/ou de données reçues par le noeud, et/ou de priorités affectées aux données et/ou de contraintes liées à la synchronisation UHF et/ou VHF.

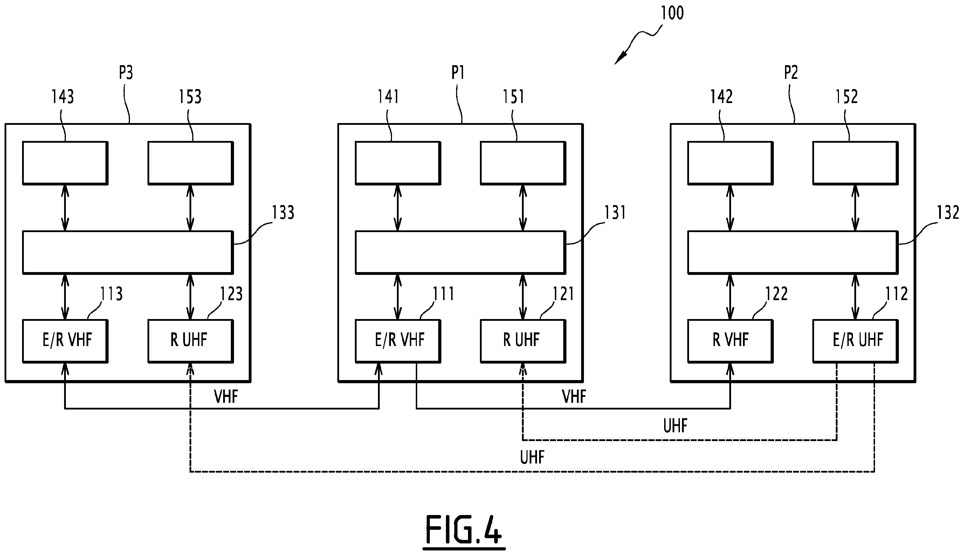

En figure 4 sont représentés un système 100 comportant trois noeuds P1, P2, P3 similaires chacun au noeud 1 et à portée radio les uns des autres.

Chaque équipement référencé N sur la figure 1, pour N = 11 à 15 en référence au noeud 1 correspond à l'équipement référencé Ni du noeud Pi, pour i=1 à 3, sur la figure 4.

Cette figure 4 illustre les possibilités de communication de type « full-duplex » avec ces trois noeuds P1 à P3 monovoie en émission, et bi-voies en réception.

Dans la configuration considérée :
- dans le noeud P1, le module d'émission/réception 111 opère en VHF, le module de réception 121 opère en UHF ;
- dans le noeud P2, le module d'émission/réception 112 opère en UHF, le module de réception 122 opère en VHF ;
- dans le noeud P3, le module d'émission/réception 113 opère en VHF, le module de réception 123 opère en UHF.

Les postes P1 et P2 peuvent ainsi communiquer ensemble en mode « full-duplex » sur des voies radio différentes pour la communication dans un sens (en UHF) et la communication dans l'autre sens (en VHF) ; en même temps que les postes P1 et P3 communiquent en émission/réception entre eux en VHF. Le poste P2 peut émettre en même temps en UHF vers P3, qui peut recevoir ces données émises par P2.

Comme illustré en figure 4, les noeuds restent en communication bi-directionnelle de deux manières :
- soit via une même gamme de fréquences sur les deux directions de la communication : par exemple les noeuds P1 et P3 qui communiquent en VHF,
- soit via une gamme de fréquences dans une direction, et une autre dans l'autre direction : par exemple, le noeud P1 émet vers le noeud P2 en VHF et reçoit depuis le noeud P2 en UHF.

Lorsque, dans un noeud, la connectivité est rompue en UHF, qui a une portée plus limitée que la VHF :
- le module de réception simple permet de rester à l'écoute des messages et conférences en VHF ;
- si une communication doit être établie en VHF, alors le noeud permute sa voie UHF et VHF
- il reste en réception simple (ie mode « silence radio ») UHF avec les noeuds à proximité et peut leur donner des ordres via la VHF, puisque ces derniers sont en écoute simple VHF.

Lorsque la connectivité UHF revient,
- l'information est connue grâce à la réception simple UHF du noeud qui détecte la présence d'un noeud qui était jusqu'alors hors de portée ;
- le noeud retourne en émission/réception UHF et en réception simple VHF.

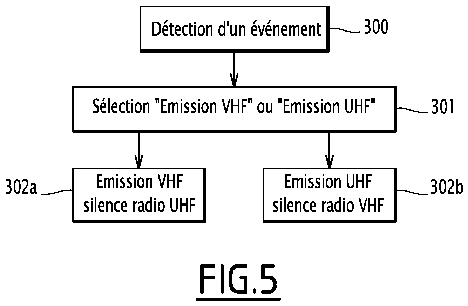

En figure 5 est représenté un organigramme des étapes d'un procédé mis en oeuvre dans un noeud radio dans un mode de mise en oeuvre de l'invention.

Dans une étape 300, la survenue d'un événement est détectée, de la manière décrite plus haut.

En fonction de cet événement et d'au moins une règle, le cas « émission VHF » ou le cas « émission UHF » est sélectionné, dans une étape 301, de la manière décrite plus haut.

Les commandes correspondant au cas sélectionné sont alors mises en oeuvre par le module de pilotage 13 (étape 302a ou 302b).

L'invention permet ainsi de miniaturiser le noeud radio en diminuant le nombre de ressources d'émission, grâce à la mutualisation de ces ressources entre différents réseaux de télécommunications.

Le noeud radio reste en écoute sur toutes les voies radio, et peut émettre quasi-instantanément sur toutes les voies radio grâce à la capacité de commutation quasi-immédiate entre les modules d'émission et les modules de traitement numérique (il n'y a pas de délais dus à des chargement/déchargement de logiciels).

Selon l'invention, une commutation numérique entre les deux formes d'ondes UHF, VHF est réalisée, dans le traitement en émission, avant la fourniture des données à émettre au convertisseur numérique/analogique 22, et les modules de conversion analogique/numérique 22, modulateur 23, amplificateur 24, émetteur radio-fréquence 25 sont communément utilisés à l'émission UHF ou à l'émission VHF.

Dans le mode de réalisation décrit en référence aux figures, il était considéré un module matériel d'émission/réception et un module matériel de réception simple. L'invention peut néanmoins être mise en oeuvre lorsqu'on considère un module d'émission et deux modules de réception indépendants du module d'émission. Dans ce cas, il n'y a pas besoin d'intervertir les modules de réception lorsque le protocole de communication mis en oeuvre par le module d'émission change.

Dans un autre mode de réalisation, l'invention est mise en oeuvre sur la base de par exemple deux modules matériels d'émission/réception (à la place d'un module matériel d'émission/réception et un module matériel de réception simple), la fonctionnalité d'émission d'un de ces deux modules étant non utilisée pour respecter des contraintes d'alimentation électrique. L'utilisation de la fonctionnalité d'émission peut être dans un mode d'utilisation réalisée alternativement sur chacun des modules matériels d'émission/réception. Il n'y a alors pas besoin d'intervertir les modules d'émission/réception pour leur fourniture/réception de données aux modules de traitement numériques.

En référence aux figures, il a été considéré un noeud relayant les communications de deux réseaux. Bien sûr l'invention peut être mise en oeuvre dans le cas d'un noeud relayant les communications d'un nombre n quelconque de réseaux, n pouvant être strictement supérieur à 2, et l'invention permettant de partager les capacités d'émission entre plusieurs réseaux, pour peu que la capacité d'émission puisse être utilisée alternativement pour les deux réseaux. Le noeud comporte alors n étages radiofréquence dont certains ont une capacité en émission et réception et d'autres en réception uniquement. Seuls les étages radiofréquences en émission nécessitent un amplificateur de puissance synonyme de consommation et de volume. Un module de pilotage commande les connexions entre les étages radiofréquences d'émission (et le cas échéant de réception) et le module de traitement numérique spécifique à chaque réseau.

Il a été considéré un réseau basé sur des communications de type UHF, un autre sur des communications de type VHF. Bien sûr, l'invention peut être mise en oeuvre avec des types variés de protocoles de communication, sous réserve qu'un dispositif d'émission commun puisse être utilisé. Par exemple, les protocoles des réseaux mutualisés en émission pourrait être les technologies 2G et 3G. Il peut encore être mis en oeuvre avec des modules de traitements numériques travaillant dans la même gamme de fréquence mais sur des canaux fréquentiels différents (par exemple deux modules travaillant en VHF peuvent, par le procédé proposé, mutualiser le module d'émission).

## Revendications

1. Noeud de communication (1) adapté pour recevoir et/ou émettre des radiocommunications selon simultanément au moins un premier protocole de communication (VHF) et un deuxième protocole de communication (UHF) distinct du premier protocole, comprenant :
un premier étage de traitement numérique (14) adapté pour effectuer des opérations spécifiques au premier protocole sur un signal numérique et un deuxième étage de traitement numérique (15) adapté pour effectuer des opérations spécifiques au deuxième protocole sur un signal numérique, lesdits étages de traitement numériques étant adaptés pour opérer en parallèle,
un premier étage de réception (11) adapté pour fonctionner selon le premier protocole de communication,
un deuxième étage de réception (12) adapté pour fonctionner selon le deuxième protocole de communication,
le premier, respectivement deuxième, étage de réception comprenant un récepteur radiofréquence (19, 16) adapté pour recevoir un signal radiofréquence, un démodulateur (20,17) adapté pour démoduler le signal radiofréquence reçu et un convertisseur analogique/numérique (21, 18) pour convertir le signal démodulé analogique en un signal numérique fourni au premier, respectivement deuxième, étage de traitement numérique,
un étage d'émission (11) adapté pour fonctionner selon le premier protocole de communication et selon le deuxième protocole de communication, comprenant un convertisseur numérique/analogique (22) pour convertir en un signal analogique un signal numérique fourni par le premier étage de traitement numérique ou le deuxième étage de traitement numérique, un modulateur (23) adapté pour moduler un signal analogique qui lui est fourni en entrée, un amplificateur (24) pour amplifier un signal analogique qui lui est fourni en entrée et un émetteur radiofréquence (25) adapté pour émettre un signal radiofréquence correspondant au signal analogique modulé par ledit modulateur et amplifié par ledit amplificateur,
ledit noeud étant **caractérisé en ce qu'**il comporte en outre un module de pilotage (13) adapté pour détecter la survenue d'un événement, pour sélectionner en fonction d'une règle et dudit événement détecté, le premier protocole de communication ou le deuxième protocole de communication et pour commander l'étage d'émission pour fonctionner sélectivement selon le protocole sélectionné et pour ne plus fonctionner selon le protocole non sélectionné.

2. Noeud de communication (1) selon la revendication 1, dans lequel le module de pilotage (13) est en outre adapté, suite à la sélection dudit protocole, pour commander à l'étage numérique, parmi le premier étage de traitement numérique (14) et le deuxième étage de traitement numérique (15), adapté pour fonctionner selon le protocole de communication non sélectionné, de stopper la fourniture de signal numérique à l'étage d'émission (11).

3. Noeud de communication (1) selon la revendication 1 ou 2, adapté pour commander l'émission par l'étage d'émission (11) selon le protocole de communication non sélectionné, avant que ledit étage d'émission ne fonctionne sélectivement selon le protocole sélectionné, d'une notification d'un arrêt d'émission selon ledit protocole de communication non sélectionné.

4. Noeud de communication (1) selon l'une des revendications précédentes, dans lequel l'événement détecté par le module de pilotage (13) comprend l'indication d'une donnée à émettre par le noeud, une requête de synchronisation par un des premier et deuxième étages de traitement numérique et/ou l'absence de signal numérique fourni par un des premier et deuxième étages de traitement numérique.

5. Noeud de communication (1) selon l'une des revendications précédentes, dans lequel la règle est relative à au moins un noeud destinataire et/ou un noeud émetteur, un ordre de priorité affecté à des données de communication reçues par le noeud, et/ou une contrainte de synchronisation propre au premier et/ou au deuxième étage de traitement numérique.

6. Noeud de communication (1) selon l'une des revendications précédentes, dans lequel le premier (11), respectivement deuxième (12), étage de réception est adapté pour fonctionner alternativement selon le premier protocole de communication et le deuxième protocole de communication, et dans lequel lorsque le module de pilotage (13) commande l'étage d'émission (11) pour fonctionner sélectivement selon le protocole sélectionné et pour ne plus fonctionner selon le protocole non sélectionné :
- il commande en outre le premier étage de réception pour fonctionner sélectivement selon le protocole sélectionné et pour ne plus fonctionner selon le protocole non sélectionné,
- il commande en outre le deuxième étage de réception pour fonctionner sélectivement selon le protocole non sélectionné et pour ne plus fonctionner selon le protocole sélectionné,
- il commute les premier et deuxième étages de réception pour la fourniture des données destinées aux premier et deuxième étages numériques.

7. Noeud de communications (1) selon l'une quelconque des revendications précédentes, dans lequel les premier (14) et deuxième (15) étages de traitement numériques comportent chacun au moins un processeur qui lui est spécifique.

8. Noeud de communication selon l'une quelconque des revendications précédentes, dans lequel le même amplificateur (24) est adapté pour amplifier le signal analogique qui lui est fourni en entrée selon le premier protocole de communication et le deuxième protocole de communication.

9. Procédé de traitement dans un noeud de communication (1) adapté pour recevoir et/ou émettre des radiocommunications selon simultanément au moins un premier protocole de communication (VHF) et un deuxième protocole de communication (UHF) distinct du premier protocole, le noeud comprenant
un premier étage de traitement numérique (14) adapté pour effectuer des opérations spécifiques au premier protocole sur un signal numérique et un deuxième étage de traitement numérique (15) adapté pour effectuer des opérations spécifiques au deuxième protocole sur un signal numérique, lesdits étages de traitement numériques étant adaptés pour opérer en parallèle,
un premier (11), respectivement deuxième (12), étage de réception adapté pour fonctionner selon le premier, respectivement deuxième, protocole de communication, et comprenant chacun un récepteur radiofréquence (19, 16) adapté pour recevoir un signal radiofréquence, un démodulateur (20, 17) adapté pour démoduler le signal radiofréquence reçu et un convertisseur analogique/numérique (21, 18) pour convertir le signal démodulé analogique en un signal numérique fourni au premier, respectivement deuxième, étage de traitement numérique,
un étage d'émission (11) adapté pour fonctionner selon le premier protocole de communication et selon le deuxième protocole de communication, comprenant un convertisseur numérique/analogique (22) pour convertir en un signal analogique un signal numérique fourni par le premier étage de traitement numérique (14) ou le deuxième étage de traitement numérique (15), un modulateur (23) adapté pour moduler un signal analogique qui lui est fourni en entrée, un amplificateur (24) pour amplifier un signal analogique qui lui est fourni en entrée et un émetteur radiofréquence (25) adapté pour émettre un signal radiofréquence correspondant au signal analogique modulé par ledit modulateur et amplifié par ledit amplificateur,
le procédé étant **caractérisé en ce qu'**il comprend les étapes suivantes mises en oeuvre par le noeud :
- la survenue d'un événement est détectée, et il est sélectionné en fonction d'une règle et dudit événement détecté, le premier protocole de communication ou le deuxième protocole de communication ; et
- on commande l'étage d'émission pour fonctionner sélectivement selon le protocole sélectionné et pour ne plus fonctionner selon le protocole non sélectionné.

10. Procédé de traitement selon la revendication 9, selon lequel l'événement détecté comprend l'indication d'une donnée à émettre par le noeud, une requête de synchronisation par un des premier et deuxième étages de traitement numérique et/ou l'absence de signal numérique fourni par un des premier et deuxième étages de traitement numérique.

11. Procédé de traitement selon la revendication 9 ou 10, selon lequel la règle est relative à au moins un noeud destinataire et/ou un noeud émetteur, un ordre de priorité affecté à des données de communication reçues par le noeud, et/ou une contrainte de synchronisation propre au premier et/ou au deuxième étage de traitement numérique.

12. Procédé de traitement selon l'une des revendications 9 à 11, selon lequel le même amplificateur (24) est adapté pour amplifier le signal analogique qui lui est fourni en entrée selon le premier protocole de communication et le deuxième protocole de communication.

## Patentansprüche

1. Kommunikationsknoten (1), der geeignet ist, Funknachrichten gleichzeitig gemäß mindestens einem ersten Kommunikationsprotokoll (VHF) und einem zweiten Kommunikationsprotokoll (UHF), unterschiedlich zum ersten Protokoll, zu empfangen und/oder zu senden, umfassend:
eine erste digitale Verarbeitungsstufe (14), die geeignet ist, an einem digitalen Signal Operationen durchzuführen, die spezifisch für das erste Protokoll sind, und eine zweite digitale Verarbeitungsstufe (15), die geeignet ist, an einem digitalen Signal Operationen durchzuführen, die für das zweite Protokoll spezifisch sind, wobei die digitalen Verarbeitungsstufen geeignet sind, parallel zu arbeiten,
eine erste Empfangsstufe (11), die geeignet ist, gemäß dem ersten Kommunikationsprotokoll zu arbeiten,
eine zweite Empfangsstufe (12), die geeignet ist, gemäß dem zweiten Kommunikationsprotokoll zu arbeiten,
wobei die erste, respektive zweite Empfangsstufe, einen Hochfrequenzempfänger (19, 16), der geeignet ist, ein Hochfrequenzsignal zu empfangen, einen Demodulator (20, 17), der geeignet ist, das empfangene Hochfrequenzsignal zu demodulieren und einen Analog/Digital-Wandler (21,18) zum Umwandeln des demodulierten analogen Signals in ein digitales Signal, das an die erste, respektive zweite digitale Verarbeitungsstufe geliefert wird, umfasst
eine Sendestufe (11), die geeignet ist, gemäß dem ersten Kommunikationsprotokoll und gemäß dem zweiten Kommunikationsprotokoll zu arbeiten, und einen Digital/Analog-Wandler (22) zum Umwandeln eines von der ersten digitalen Verarbeitungsstufe oder der zweiten digitalen Verarbeitungsstufe gelieferten digitalen Signals in ein analoges Signal, einen Modulator (23), der geeignet ist, ein analoges Signal, das ihm am Eingang geliefert wird, zu modulieren, einen Verstärker (24) zum Verstärken eines ihm am Eingang gelieferten analogen Signals und einen Hochfrequenzsender (25), der geeignet ist, ein Hochfrequenzsignal zu senden, das dem von dem Modulator gelieferten und von dem Verstärker verstärkten modulierten Signal entspricht, umfasst,
wobei der Knoten **dadurch gekennzeichnet ist, dass** er außerdem ein Steuermodul (13) aufweist, das geeignet ist, das Auftreten eines Ereignisses zu detektieren, um abhängig von einer Regel und dem detektierten Ereignis das erste Kommunikationsprotokoll oder das zweite Kommunikationsprotokoll auszuwählen und um die Sendestufe derart anzusteuern, dass sie selektiv gemäß dem ausgewählten Protokoll arbeitet und nicht mehr gemäß dem nicht ausgewählten Protokoll arbeitet.

2. Kommunikationsknoten (1) nach Anspruch 1, bei dem das Steuermodul (13) außerdem angepasst ist, im Anschluss an die Auswahl des Protokolls der gemäß dem nicht ausgewählten Kommunikationsprotokoll arbeitenden digitalen Stufe, ausgewählt aus der ersten digitalen Verarbeitungsstufe (14) und der zweiten digitalen Verarbeitungsstufe (15), zu befehlen, die Lieferung des digitalen Signals an die Sendestufe (11) zu stoppen.

3. Kommunikationsknoten (1) nach Anspruch 1 oder 2, der angepasst ist, das Senden von der Sendestufe (11) gemäß dem nicht ausgewählten Kommunikationsprotokoll einer Meldung eines Anhaltens des Sendens gemäß dem nicht ausgewählten Kommunikationsprotokoll zu befehlen, bevor die Sendestufe selektiv gemäß dem ausgewählten Protokoll arbeitet.

4. Kommunikationsknoten (1) nach einem der vorhergehenden Ansprüche, bei dem das von dem Steuermodul (13) detektierte Ereignis die Angabe von von dem Knoten zu sendenden Daten, eine Synchronisationsabfrage von der ersten oder der zweiten numerischen Verarbeitungsstufe und/oder das Fehlen eines von der ersten oder der zweiten digitalen Verarbeitungsstufe gelieferten digitalen Signals umfasst.

5. Kommunikationsknoten (1) nach einem der vorhergehenden Ansprüche, bei dem die Regel mindestens einen Zielknoten und/oder einen Sendeknoten, eine Rangfolge, die den von dem Knoten empfangenen Kommunikationsdaten zugewiesen ist, und/oder eine Synchronisationsbedingung, die der ersten und/oder der zweiten digitalen Verarbeitungsstufe eigen ist, betrifft.

6. Kommunikationsknoten (1) nach einem der vorhergehenden Ansprüche, bei dem die erste (11), respektive zweite (12), Empfangsstufe geeignet ist, wechselweise gemäß dem ersten Kommunikationsprotokoll und dem zweiten Kommunikationsprotokoll zu arbeiten, und bei dem, wenn das Steuermodul (13) die Sendestufe (11) ansteuert, um selektiv gemäß dem ausgewählten Protokoll zu arbeiten und nicht mehr gemäß dem nicht ausgewählten Protokoll zu arbeiten:
- er außerdem die erste Empfangsstufe ansteuert, damit sie selektiv gemäß dem ausgewählten Protokoll arbeitet und nicht mehr gemäß dem nicht ausgewählten Protokoll arbeitet,
- er außerdem die zweite Empfangsstufe ansteuert, damit sie selektiv gemäß dem nicht ausgewählten Protokoll arbeitet und nicht mehr gemäß dem ausgewählten Protokoll arbeitet,
- er die erste und zweite Empfangsstufe für die Lieferung von Daten, die für die erste und zweite digitale Stufe vorgesehen sind, umzuschalten.

7. Kommunikationsknoten (1) nach einem beliebigen der vorhergehenden Ansprüche, bei dem die erste (14) und zweite (15) digitale Verarbeitungsstufe jeweils mindestens einen Prozessor, der ihr spezifisch ist, aufweisen.

8. Kommunikationsknoten (1) nach einem beliebigen der vorhergehenden Ansprüche, bei dem der gleiche Verstärker (24) geeignet ist, das analoge Signal, das ihm am Eingang gemäß dem ersten Kommunikationsprotokoll und dem zweiten Kommunikationsprotokoll geliefert wird, zu verstärken.

9. Verarbeitungsverfahren in einem Kommunikationsknoten (1), der geeignet ist, Funknachrichten gleichzeitig gemäß mindestens einem ersten Kommunikationsprotokoll (VHF) und einem zweiten Kommunikationsprotokoll (UHF), unterschiedlich zum ersten Protokoll, zu empfangen und/oder zu senden, wobei der Knoten umfasst:
eine erste digitale Verarbeitungsstufe (14), die geeignet ist, an einem digitalen Signal Operationen durchzuführen, die spezifisch für das erste Protokoll sind, und eine zweite digitale Verarbeitungsstufe (15), die geeignet ist, an einem digitalen Signal Operationen durchzuführen, die für das zweite Protokoll spezifisch sind, wobei die digitalen Verarbeitungsstufen geeignet sind, parallel zu arbeiten,
eine erste Empfangsstufe (11), respektive eine zweite Empfangsstufe (12), die geeignet ist, gemäß dem ersten, respektive zweiten, Kommunikationsprotokoll zu arbeiten, und jeweils einen Hochfrequenzempfänger (19, 16), der geeignet ist, ein Hochfrequenzsignal zu empfangen, einen Demodulator (20, 17), der geeignet ist, das empfangene Hochfrequenzsignal zu demodulieren und einen Analog/DigitalWandler (21, 18) zum Umwandeln des demodulierten analogen Signals in ein digitales Signal, das an die erste, respektive zweite digitale Verarbeitungsstufe geliefert wird, umfasst
eine Sendestufe (11), die geeignet ist, gemäß dem ersten Kommunikationsprotokoll und gemäß dem zweiten Kommunikationsprotokoll zu arbeiten, und einen Digital/Analog-Wandler (22) zum Umwandeln eines von der ersten digitalen Verarbeitungsstufe oder der zweiten digitalen Verarbeitungsstufe gelieferten digitalen Signals in ein analoges Signal, einen Modulator (23), der geeignet ist, ein analoges Signal, das ihm am Eingang geliefert wird, zu modulieren, einen Verstärker (24) zum Verstärken eines ihm am Eingang gelieferten analogen Signals und einen Hochfrequenzsender (25), der geeignet ist, ein Hochfrequenzsignal zu senden, das dem von dem Modulator gelieferten und von dem Verstärker verstärkten modulierten Signal entspricht, umfasst,
wobei das Verfahren **dadurch gekennzeichnet ist, dass** es die folgenden, von dem Knoten durchgeführten Schritte umfasst:
- das Auftreten eines Ereignisses wird detektiert und es wird abhängig von einer Regel und dem detektierten Ereignis das erste Kommunikationsprotokoll oder das zweite Kommunikationsprotokoll ausgewählt; und
- die Sendestufe wird derart angesteuert, dass sie selektiv gemäß dem ausgewählten Protokoll arbeitet und nicht mehr gemäß dem nicht ausgewählten Protokoll arbeitet.

10. Bearbeitungsverfahren nach Anspruch 9, bei dem das detektierte Ereignis die Angabe von von dem Knoten zu sendenden Daten, eine Synchronisationsabfrage von der ersten oder zweiten digitalen Verarbeitungsstufe und/oder das Fehlen des digitalen Signals, das von der ersten oder der zweiten digitalen Verarbeitungsstufe geliefert wird, umfasst.

11. Bearbeitungsverfahren nach Anspruch 9 oder 10, bei dem die Regel mindestens einen Zielknoten und/oder einen Sendeknoten, eine Rangfolge, die den von dem Knoten empfangenen Kommunikationsdaten zugewiesen ist, und/oder eine Synchronisationsbedingung, die der ersten und/oder der zweiten digitalen Verarbeitungsstufe eigen ist, betrifft.

12. Bearbeitungsverfahren nach einem der Ansprüche 9 bis 11, bei dem der gleiche Verstärker (24) geeignet ist, das analoge Signal, das ihm am Eingang gemäß dem ersten Kommunikationsprotokoll und dem zweiten Kommunikationsprotokoll geliefert wird, zu verstärken.

## Claims

1. A communication node (1) suitable for receiving and/or transmitting radio communications according to at least one first communication protocol (VHF) and one second communication protocol (UHF) different from the first protocol, including:
a first digital processing stage (14) suitable for performing operations specific to the first protocol on a digital signal and a second digital processing stage (15) suitable for performing operations specific to the second protocol on a digital signal, said digital processing stages being suitable for operating in parallel,
a first receiving stage (11) suitable for operating according to the first communication protocol,
a second receiving stage (12) suitable for operating according to the second communication protocol,
the first, second, respectively, receiving stage comprising a radio frequency receiver (19, 16) suitable for receiving a radiofrequency signal, a demodulator (20, 17) suitable for demodulating the radiofrequency signal received and an analog/digital converter (21, 18) for converting the demodulated analog signal into a digital signal provided to the first, second digital processing stage, respectively,
a transmission stage (11) suitable for operating according to the first communication protocol and according to the second communication protocol, comprising a digital/analog converter (22) for converting a digital signal provided by the first digital processing stage or the second digital processing stage into an analog signal, a modulator (23) suitable for modulating an analog signal which is inputted to it, an amplifier (24) for amplifying an analog signal which is inputted to it and a radiofrequency transmitter (25) suitable for transmitting a radio frequency signal corresponding to the modulated analog signal by said modulator amplified by said amplifier,
said node being **characterized in that** it further includes a control module (13) suitable for detecting the occurrence of an event, for selecting as a function of a rule and of said detected event, the first communication protocol or the second communication protocol, and for commanding the transmission stage to operate selectively according to the selected protocol and to no longer operate according to the non-selected protocol.

2. The communication node (1) according to claim 1, wherein the control module (13) is further suitable, following the selection of said protocol, for commanding the digital stage, among the first digital processing stage (14) and the second digital processing stage (15), suitable for operating according to the non-selected communication protocol, to stop providing the digital signal to the transmission stage (11).

3. The communication node (1) according to claim 1 or 2, suitable for ordering the transmission by the transmission stage (11) according to the non-selected communication protocol, before said transmission stage operates selectively according to the selected protocol, of a notification to stop transmission according to said non-selected communication protocol.

4. The communication node (1) according to one of the preceding claims, wherein the event detected by the control module (13) comprises indicating a datum to be transmitted by the node, a synchronization request by one of the first and second digital processing stages and/or the absence of digital signal provided by one of the first and second digital processing stages.

5. The communication node (1) according to one of the preceding claims, wherein the rule relates to at least one receiving node and/or one transmitting node, a priority order assigned to the communication data received by the node, and/or a synchronization constraint specific to the first and/or second digital processing stage.

6. The communication node (1) according to one of the preceding claims, wherein the first (11), second (12) receiving stage, respectively, is suitable for operating alternately according to the first communication protocol and the second communication protocol, and wherein, when the control module (13) commands the transmission stage (11) to operate selectively according to the selected protocol and to no longer operate according to the non-selected protocol, said control module:
- further commands the first receiving stage to operate selectively according to the selected protocol and to no longer operate according to the non-selected protocol,
- further commands the second receiving stage to operate selectively according to the non-selected protocol and to no longer operate according to the selected protocol,
- switches the first and second receiving stages to provide data intended for the first and second digital stages.

7. The communication node (1) according to any one of the preceding claims, wherein the first (14) and second (15) digital processing stages each include at least one processor specific to them.

8. The communication node (1) according to any one of the preceding claims, wherein the same amplifier (24) is adapted to amplify the analog signal which is inputted to it according to the first communication protocol and the second communication protocol.

9. A processing method in a communication node (1) suitable for receiving and/or transmitting radio communications according to at least one first communication protocol (VHF) and one second communication protocol (UHF) different from the first protocol, selectively, the node comprising
a first digital processing stage (14) suitable for performing operations specific to the first protocol on a digital signal and a second digital processing stage (15) suitable for performing operations specific to the second protocol on a digital signal, said digital processing stages being suitable for working in parallel,
a first (11), second (12) receiving stage, respectively, suitable for operating according to the first, second communication protocol, respectively, and each comprising a radio frequency receiver (19, 16) suitable for receiving a radiofrequency signal, a demodulator (20, 17) suitable for demodulating the received radiofrequency signal and an analog/digital converter (21, 18) for converting the demodulated analog signal into a digital signal provided to the first, second digital processing stage, respectively,
a transmission stage (11) suitable for operating according to the first communication protocol and according to the second communication protocol, comprising a digital/analog converter (22) to convert a digital signal provided by the first digital processing stage (14) or the second digital processing stage (15) into an analog signal, a modulator (23) suitable for modulating an analog signal which is inputted to it, an amplifier (24) for amplifying an analog signal which is inputted to it and a radiofrequency transmitter (25) suitable for transmitting a radio frequency signal corresponding to the modulated analog signal by said modulator amplified by said amplifier,
the method being **characterized in that** it comprises the following steps carried out by the node:
- the occurrence of an event is detected, and the first communication protocol or the second communication protocol is selected as a function of a rule and of said detected event; and
- the transmission stage is commanded to operate selectively according to the selected protocol and no longer operate according to the non-selected protocol.

10. The processing method according to claim 9, wherein the detected event comprises the indication of a datum to be transmitted by the node, a synchronization request by one of the first and second digital processing stages and/or the absence of digital signal provided by one of the first and second digital processing stages.

11. The processing method according to claim 9 or 10, wherein the rule relates to at least one receiving node and/or one transmitting node, a priority order assigned to the communication data received by the node, and/or a synchronization constraint specific to the first and/or second digital processing stage.

12. The processing method according to one of claims 9 to 11, wherein the same amplifier (24) is adapted to amplify the analog signal which is inputted to it according to the first communication protocol and the second communication protocol.
